# EUROPÄISCHE PATENTSCHRIFT

(11) **EP 0 626 299 B1**
(45) Veröffentlichungstag und Bekanntmachung des Hinweises auf die Patenterteilung: **16.08.1995**
(21) Anmeldenummer: 93108557.5
(22) Anmeldetag: 26.05.1993
(51) Int. Cl.: B61L 25/02

(54) **Vorrichtung zur Positionsbestimmung eines an einer Schiene verfahrbaren Fahrzeuges**
Position detecting device of a vehicle movable along a rail
Dispositif pour détecter la position d'un véhicule, déplaçable le long d'un rail

(43) Veröffentlichungstag der Anmeldung: 30.11.1994
(73) Patentinhaber: Fahrleitungsbau GmbH, D-45329 Essen (DE)
(72) Erfinder: Hartmann, Rainer, D-44807 Bochum (DE); Köthe, Werner, D-45326 Essen (DE); Lehners, Ernst, D-45141 Essen (DE)
(74) Vertreter: Masch, Karl Gerhard, Dr.

(56) Entgegenhaltungen:
- EP-A- 0 425 772
- EP-A- 0 466 217
- BE-A- 890 280
- FR-A- 2 639 307
- US-A- 3 757 112

## Beschreibung

Die Erfindung betrifft eine Vorrichtung zur Positionsbestimmung eines an einer Schiene verfahrbaren Fahrzeugs, bestehend aus einem längs der Schiene angeordneten Magnetband mit quer zur Längsrichtung der Schiene verlaufenden Magnetisierungsbereichen und einem zugeordneten, am Fahrzeug befestigten Lesekopf mit nachgeschaltetem Auswertungsbaustein.

Bei einer bekannten Vorrichtung der genannten Art (EP-A 04 25 772) sind die Magnetisierungsbereiche des Magnetbandes für eine inkrementelle Auswertung in regelmäßigen Abständen längs des Magnetbandes angeordnet. Mit anderen Worten kann aus der Zahl der von einem vorgegebenen Startpunkt aus registrierten Magnetisierungsbereiche auf die Position des Fahrzeuges geschlossen werden. Eine solche Vorrichtung ist zwar verhältnismäßig einfach aufgebaut, dafür jedoch mit dem Nachteil behaftet, daß eine Verschiebung des Fahrzeuges, die während einer zum Beispiel durch Stromausfall auftretenden Störung des Auswertungsbausteines erfolgt, nicht berücksichtigt wird und zu einer unzutreffenden Positionsbestimmung führt.

Bei einer anderen, optisch arbeitenden Vorrichtung zur Positionsbestimmung eines an einer Schiene verfahrbaren Fahrzeuges ist es zwar auch schon bekannt (DE-C-39 10 873), mit einer binären Absolutcodierung zu arbeiten. Eine solche Vorrichtung ist aber verhältnismäßig aufwendig, weil zur Verminderung der Lesefehlerhäufigkeit der Einsatz einer Vielzahl von Sensoren im Lesekopf und gegebenenfalls auch Codespuren erforderlich ist.

Der Erfindung liegt die Aufgabe zugrunde, eine einfach aufgebaute, gleichwohl aber zuverlässig arbeitende Vorrichtung der eingangs genannten Art anzugeben.

Die erfindungsgemäße Lösung dieser Aufgabe besteht darin, daß die Magnetisierungsbereiche des Magnetbandes in einer binären Absolutcodierung nach einem Faltungscode mit Fehlerkorrektur angeordnet sind.

Die durch die Erfindung erreichten Vorteile sind darin zu sehen, daß die binäre Absolutcodierung nach einem Faltungscode selbst redundant ist und deshalb die Positionsinformation mit nur einem Sensor im Lesekopf zuläßt. Grundlage der Faltungscodierung ist die Theorie der "Faltungscodierung mit gleitendem Fenster"; zu Einzelheiten darf auf M. Bossert "Kanalcodierung", D. G. Teubner, Stuttgart 1992, S. 146 - 163 verwiesen werden.

Zur Erhöhung der Lesesicherheit weist der Faltungscode ein Fehlerkorrektur auf. Das Magnetband besteht zweckmäßigerweise aus einem magnetisierbaren flexiblen Kunststoffprofil, d. h. einem Kunststoffband, dem ein magnetisierbares Metallpulver einverleibt ist.

Im folgenden wird die Erfindung anhand einer Zeichnung näher erläutert. Es zeigen:
- Fig. 1: einen Querschnitt durch eine Vorrichtung zur Positionsbestimmung und
- Fig. 2: eine Seitenansicht eines Magnetisierungswerkzeuges für ein Magnetband und der von diesem erzeugte Magnetfeldverlauf.

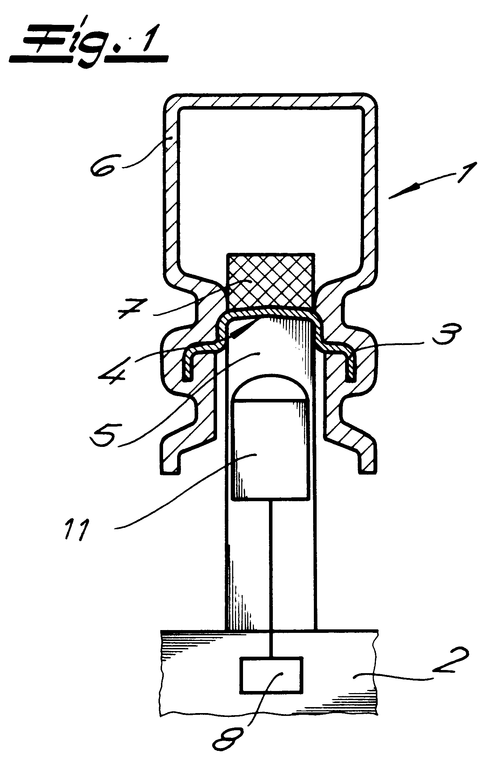

Die in Figur 1 schematisch dargestellte Vorrichtung dient zur Positionsbestimmung eines an einer Schiene 1 verfahrbaren Fahrzeuges 2. Im Ausführungsbeispiel handelt es sich bei der Schiene 1 um eine stromführende Schiene für den Antrieb des Fahrzeuges 2. Bei der Schiene könnte es sich aber auch um eine Schiene handeln, an der das Fahrzeug geführt ist, selbstverständlich kann es sich auch um eine stromführende Schiene an einer das Fahrzeug tragenden Schiene handeln. Die stromführende Schiene 1 besteht aus einem Metallprofil 3 mit Schleiffläche 4 für einen Stromabnehmer 5 des Fahrzeuges 2, der mit dem Antrieb des Fahrzeuges 2 verbunden ist, und aus einem das Metallprofil 3 bis auf die Schleiffläche 4 ummantelnden Kunststoffprofil 6. Auf der Rückseite des Metallprofils 3 ist ein Magnetband 7 in Form eines magnetisierbaren flexiblen Kunststoffbandes aufgebracht, welches quer zur Längsrichtung der Schiene 1 verlaufende Magnetisierungsbereiche aufweist. Diese werden mit einem zugeordneten, am Fahrzeug 2 bzw. Stromabnehmer 5 angeordneten Lesekopf 11 mit einem einzigen Sensor gelesen, dem ein elektrischer Auswertungsbaustein 8 nachgeschaltet ist. Der Sensor kann ein Halldetektor sein.

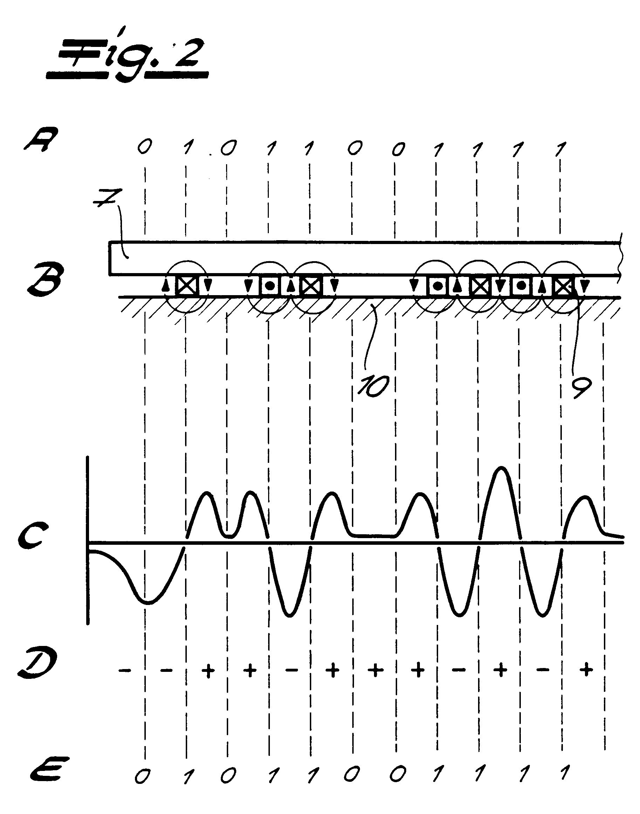

Die Magnetisierungsbereiche des Magnetbandes 7 sind in einer binären Absolutcodierung nach einem Faltungscode mit Fehlerkorrektur angeordnet. Diese Anordnung wird mit Hilfe des in Figur 2 dargestellten Magnetisierungswerkzeuges erzeugt, in der A eine binäre Codefolge, B eine Seitenansicht eines Leiterbildes, C den zugeordneten Magnetfeldverlauf, D das Vorzeichen des Magnetfeldes und E die Interpretation des Vorzeichenwechsels als "1" beinhaltet. Bei dem Magnetisierungswerkzeug handelt es sich um ein Werkzeug zur einseitig mehrpoligen Magnetisierung pulvergefüllter Kunststoffprofile (vgl. DE-C-30 31 983). Es besteht aus einer stromdurchflossenen Leiteranordnung 9 in Form eines Kupferleiters auf einem Substrat 10, auf den das Kunststoffband 7 aufgelegt ist. Zur Darstellung der digitalen Codewerte des Faltungscodes wird nun ausgenutzt, daß ein Leiter jeweils ein räumlich scharf begrenztes Polpaar erzeugt, wobei der Polwechsel sich exakt unter dem Leiter befindet. Zwischen zwei benachbarten Leitern unterschiedlicher Stromrichtung findet kein Vorzeichenwechsel des magnetischen Feldes statt, da sich die Felder vorzeichenrichtig überlagern. Die digitale Information wird nun durch Flußwechsel und Bereiche gleichen Vorzeichens dargestellt. Das entsprechende Leiterbild für ein festes Codewort mit zugehörigem Magnetfeldverlauf sowie einer aus den Vorzeichenwechseln des Magnetfeldes sich ergebenden Codierfolge ist Figur 2 im einzelnen zu entnehmen. Das Magnetisierungswerkzeug unterscheidet sich von einem solchen für eine inkrementelle Positionsbestimmung dadurch, daß der Abstand benachbarter Leiter nicht ausschließlich eine Polteilung ausmacht, sondern ein beliebiges Vielfaches davon. Die mit dem Verfahren mögliche Ortsauflösung entspricht exakt dem kleinsten Vorkommenabstand benachbarter Leiter und somit genau einer Polteilung. Jedenfalls kann aus der jeweils gewonnenen Information des Faltungscodes eine eindeutige Positionsbestimmung durchgeführt werden.

## Patentansprüche

1. Vorrichtung zur Positionsbestimmung eines an einer Schiene (1) verfahrbaren Fahrzeugs (2), bestehend aus einem längs der Schiene (1) angeordneten Magnetband (7) mit quer zur Längsrichtung der Schiene (1) verlaufenden Magnetisierungsbereichen und einem zugeordneten, am Fahrzeug (2) befestigten Lesekopf (11) mit nachgeschaltetem Auswertungsbaustein (8), **dadurch gekennzeichnet,** daß die Magnetisierungsbereiche des Magnetbandes (7) in einer binären Absolutcodierung nach einem Faltungscode mit Fehlerkorrektur angeordnet sind.

2. Vorrichtung nach Anspruch 1, dadurch gekennzeichnet, daß das Magnetband (7) aus einem magnetisierbaren flexiblen Kunststoffprofil besteht.

## Claims

1. A device for determining the position of a vehicle (2) which can move on a rail (1), consisting of a magnetic strip (7) disposed along the rail (1) and having magnetisation regions extending transversely to the longitudinal direction of the rail (1), and an associated reading head (11) attached to the vehicle (2) with an evaluation component (8) connected downstream, characterised in that the magnetisation regions of the magnetic strip (7) are arranged in a binary absolute coding according to a convolution code with error correction.

2. A device according to claim 1, characterised in that the magnetic strip (7) consists of a magnetisable, flexible plastic section.

## Revendications

1. Dispositif pour déterminer la position d'un véhicule (2) déplaçable sur un rail (1), et qui est constitué par une bande magnétique (7) disposée le long du rail (1) et comportant des zones d'aimantation, qui s'étendent transversalement par rapport à la direction longitudinale du rail (1), et par une tête associée de lecture (11), fixée sur le véhicule (2) et en aval de laquelle est branché un module d'évaluation (8), caractérisé en ce que les zones d'aimantation de la bande magnétique (7) sont disposées selon un codage binaire absolu conformément à un code de convolution avec correction d'erreur.

2. Dispositif selon la revendication 1, caractérisé en ce que la bande magnétique (7) est constituée par un profilé en matière plastique flexible aimantable.
